# EUROPEAN PATENT APPLICATION

(11) **EP 1 832 172 A1**
(43) Date of publication of application: **12.09.2007**
(21) Application number: 07103826.9
(22) Date of filing: 09.03.2007
(51) Int. Cl.: A21D 13/00, A23L 1/01, A23P 1/08

(54) **A method of preparing a ready-to-eat cooked foodstuff**

(30) Priority: 10.03.2006 WO PCT/NL2006/000127
(71) Applicant: CSM Nederland B.V., 1112 XE Diemen (NL)
(72) Inventor: Meijer, Henk-Jan, 7329 AZ Apeldoorn (NL); Heijmans, Rudy Mathias Henricus, 6932 MN Westervoort (NL); Henson, Christophor John, Manchester M21 9WB (GB)
(74) Representative: Swinkels, Bart Willem

(57) **Abstract**

One aspect of the present invention relates to a method of preparing a ready-to-eat foodstuff, said method comprising the steps of:
• applying a fat-based coating to the exterior of an uncooked or incompletely cooked foodstuff; and
• contacting the foodstuff with superheated steam having a temperature of 120-300 °C for a period of 0.3-15 minutes, preferably of 1-10 minutes to obtain the ready-to-eat foodstuff.

The method of the present invention enables the preparation of ready-to-eat foodstuffs with reduced fat levels as it can suitably be used to replace cooking methods that make use of large quantities of fat, e.g. deep frying and shallow frying.

Another aspect of the invention relates to a ready-to-eat doughnut comprising cooked dough, said cooked dough being characterised by a fat content of 4-10 wt.%, a water content of 30-40 wt.% and a specific volume of 2.5-4.5 ml/g, said doughnut being characterised in that the average fat content in the top layer of 1 mm thickness is at least two times higher than the average fat content in the top layer of 5 mm thickness.

## Description

### TECHNICAL FIELD OF THE INVENTION

The present invention relates to a method or preparing a ready-to-eat cooked foodstuff by heat treating an uncooked or incompletely cooked foodstuff. Examples of foodstuffs that may suitably be cooked by means of the present method include doughnuts, fried noodles, taco's, foodstuffs coated with bread crumbs and lardy cakes. The invention also provides a ready-to-eat low fat doughnut.

### BACKGROUND OF THE INVENTION

A doughnut, or donut, typically is a sweet deep-fried piece of dough or batter. The two most common types are the torus-shaped ring doughnut, and the filled doughnut, a flattened sphere injected with jam/jelly, cream, custard, or another sweet filling.

Doughnut dough is traditionally prepared from the following ingredients: flour, milk, sugar, shortening, egg (beaten), salt and leavening agent (baking powder or yeast). In case yeast is employed as a leavening agent, the dough is subjected to so called proofing in order to allow the yeast to expand the dough. During deep frying of the doughnut dough the moisture content of the dough is reduced and simultaneously fat is absorbed by the doughnut. Typically, the cooked dough of a doughnut contains about 17-32 wt.% of fat.

During the frying process, fat is transferred from the frying medium into the cooked doughnut by two mechanisms: (i) by absorption or penetration of the fat into the frying product and (ii) by adsorption that involves only the fat that adheres to the exterior surface of the skin without becoming an integral part of it.

Fat absorption is a significant factor in doughnut quality as it contributes richness of flavour, improves mouthfeel and eating quality, and extends the product's shelf life. Doughnuts with insufficient fat absorption generally possess a pasty texture and eating quality.

Doughnuts are a very popular food in many countries, especially in the USA. Doughnuts, however, are high in both fat and calories and as a result do not fit in a low fat diet.

Hence, it is not surprising that efforts have been made to provide low fat doughnuts. US 4,937,086, for instance, describes a process for preparing doughnuts having reduced fat and a substantially uniform texture which comprises providing a doughnut mix containing about 0.2-10% by weight of polyvinylpyrrolidone, blending with water to form batter, making doughnut shaped forms from said batter, and cooking said doughnut shaped forms by submersion in heated edible fat.

US 5,804,243 describes a method for producing a low-fat, chemically-leavened, cake doughnut comprising the steps of:
a) preparing a thermally-reversible gel comprised of 80-95% water, 5-20% of insoluble, water binding fibre and 0.2-2% of thermally-reversible, hydrocolloid gelling agent;
b) preparing a self-sustaining, low modulus doughnut dough having a moisture content of from 25-30% by weight, said dough comprised of from 20-30% of the gel of step (a), from 30-60% flour, from 10-30% sugars, and chemical leavening agents;
c) forming the dough into self-sustaining doughnut-shaped pieces;
d) baking the dough pieces in a preheated oven in less than 10 minutes at a temperature of 375-425 °F.

US 2006/0182865 describes a process of making a ultra low fat doughnut, said process comprising the steps of: providing batter comprising enriched wheat flour bleached, a fast-acting leavening agent and soy flour; handcutting said batter into doughnut pieces, wherein said doughnut pieces are between 1.3 and 1.7 ounces; proofing said doughnut pieces; and baking said doughnut pieces in a convection oven.

It is the objective of the present invention to provide low fat doughnuts having comparable eating quality as full fat deep fried doughnuts.

### SUMMARY OF THE INVENTION

The inventors have realised the aforementioned objective by applying a fat-based coating to uncooked or incompletely cooked doughnut dough and subsequently contacting the fat coated doughnut dough with superheated steam to obtain the ready-to-eat doughnut. The inventors have furthermore discovered that the benefits of this procedure are not restricted to the preparation of ready-to-eat doughnuts, but can equally advantageously be employed in the preparation of other dough- or batter-based foodstuffs, such as fried noodles, taco's, foodstuffs coated with bread crumbs and lardy cakes. Consequently, the present invention provides a method of preparing a ready-to-eat foodstuff, said method comprising the steps of:
- applying a fat-based coating to the exterior of an uncooked or incompletely cooked foodstuff; and
- contacting the fat coated foodstuff with superheated steam having a temperature of 120-300 °C for a period of 0.3-15 minutes, preferably of 1-10 minutes to obtain the ready-to-eat foodstuff.

The method according to the present invention enables the preparation of ready-to-eat foodstuffs with reduced fat levels as it can suitably be used to replace cooking methods that make use of large quantities of fat, e.g. deep frying and shallow frying. Despite these low fat levels, the eating quality of these ready-to-eat foodstuffs is excellent. It was found, for instance, that the skin and crumb characteristics of the doughnuts obtained with the present method are surprisingly similar to those of deep fried doughnuts.

The use of steam frying for the preparation of low fat snacks has been described in several publications.

EP-A 0 482 709, for instance, describes a process for making a low fat farinaceous snack, said process comprising cooking a dough in a mould at a temperature of 148-218 °C using superheated steam.

WO 2004/066751 describes a method for thermally treating a product, comprising the following steps:
a. determining the water activity value which, for carrying out the thermal treatment, is required to have the product obtain the desired properties;
b. contacting the product with water vapour, at an increased temperature and an associated saturated vapour pressure (p*), while the temperature on the surface of the product is 80-260 °C;
c. setting a vapour pressure (p) in step (b) such that p/p* is equal to the water activity value determined in step (a); and
d. maintaining for a time duration (t) the process conditions mentioned in steps (b) and (c) for obtaining the product with the desired product properties.
The method described in WO 2004/066751 is said to be suitable for treating cocoa beans, cocoa nibs, coffee beans, peanuts, nuts, soy products, (powder-form) herbs, (powder-form) spices, potato, starch and cereal products and bread, cake, meat, snack and fish products.

Ready-to-eat doughnuts obtained by the present method have a much lower fat content than ordinary doughnuts, but as a result of the application of a fat-based coating prior to the contacting with the superheated steam, these low fat doughnuts are essentially indistinguishable from deep fried doughnuts. The ready-to-eat doughnuts obtained by this particular embodiment are characterised by a low overall fat content in combination with a high fat content of the upper skin.

Accordingly, another aspect of the invention relates to a ready-to-eat doughnut comprising a cooked dough, said cooked dough having a fat content of 4-10 wt.%, a water content of 30-40 wt.% and a specific volume of 2.5-4.5 ml/g, said doughnut being characterised in that the average fat content in the top layer of 1 mm thickness is at least two times higher than the average fat content in the top layer of 5 mm thickness.

### DETAILED DESCRIPTION OF THE INVENTION

Accordingly, one aspect of the invention relates to a method of preparing a ready-to-eat foodstuff, said method comprising the steps of:
- applying a fat-based coating to the exterior of an uncooked or incompletely cooked foodstuff; and
- contacting the foodstuff with superheated steam having a temperature of 120-300 °C for a period of 0.3-15 minutes, preferably of 1-10 minutes to obtain the ready-to-eat foodstuff.

The terms "superheated steam" as used herein refers to steam having a (static) pressure that is below the saturated vapour pressure of said steam. The saturated vapour pressure of steam varies with temperature. The higher the temperature, the higher the saturated vapour pressure. Because the pressure of the superheated steam employed in the present method is lower than the saturated vapour pressure, the steam is capable of drying, that is, vaporising the water out of the foodstuffs with which the superheated steam flow is contacted.

The term "fat-based coating" as used herein refers to a composition containing at least 20 wt.% of fat. Preferably, the fat-based coating of the present invention contains at least 50 wt.% and more preferably at least 70 wt.% of fat. Besides fat, the fat-based coating may suitably contain additional ingredients, such as water, sugars and protein. According to a particularly preferred embodiment fat and water together constitute at least 80 wt.%, even more preferably at least 90 wt.% of the fat-based coating. The fat-based coating may suitably contain ingredients that will promote surface browning during treatment with superheated steam. Examples of such ingredients are reducing sugars and proteinaceous components (amino acids, oligo- and polypeptides).

In the present method, different coating techniques may suitably be applied. The fat-based coating material can, for example, be sprayed or brushed onto the uncooked or incompletely cooked foodstuff. Alternatively, the fat-based coating can be applied by dipping or immersing the foodstuff into a bath of liquid fat. Short immersion in hot fat may suitably be employed to apply a fat-based coating, provided this treatment does not result in a completely cooked foodstuff. In the case of foodstuffs that are prepared from a batter, such as lardy cakes, it can be advantageous to first immerse a piece of batter in hot oil to ensure that the piece of batter becomes self supporting by 'setting' the surface of the product and to subsequently contact these self supporting pieces with the superheated steam.

The method according to the present invention may advantageously be employed to cook a variety of dough- or batter-based foodstuffs including, doughnuts, fried noodles, taco's, foodstuffs coated with bread crumbs, lardy cakes, Spritzkuchen, Krapfen, churros, bu 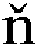 uelos and xuxos.

According to a particularly preferred embodiment, the present method is used to cook an uncooked or incompletely cooked foodstuff that contains at least 40 wt.% of a flour-based dough or batter. Besides dough or batter, the uncooked or incompletely cooked foodstuff may suitably contain a filling. Such a filling usually represents not more than 80 wt.%, preferably not more than 70 wt.% of the uncooked or incompletely cooked foodstuff. Typically, the combination of dough, batter and filling represents at least 90 wt.% of the uncooked or incompletely cooked foodstuff. The dough or batter that is contained in the uncooked or incompletely cooked foodstuff typically contains at least 20 wt.% of flour and at least 30 wt.% of water. Typically, flour and water together represent at least 70 wt.% of the uncooked or incompletely cooked foodstuff.

In case the ready-to-eat foodstuff is a flour-based foodstuff, it is preferred that, prior to the contacting with the superheated steam, the core of the uncooked or incompletely cooked foodstuff has not been subjected to temperatures that cause starch to gelatinise. Accordingly, in a very preferred embodiment of the present method, the flour starch in the core of the flour-based uncooked or incompletely cooked foodstuffs is non-gelatinised when it is contacted with the superheated steam.

The benefits of the present invention are particularly pronounced and unexpected in case the fat-based coating is applied onto an uncooked foodstuff and the fat coated uncooked foodstuff is subsequently contacted with the superheated steam.

The inventors have observed that the application of a small amount of fat prior to the contacting of the foodstuff with the superheated steam enables the preparation of a ready-to-eat foodstuff that is very similar to a deep or shallow fried foodstuff, except for its substantially lower fat content. Typically, the fat is applied in an amount of 1-10% by weight of the uncooked or incompletely cooked foodstuff. Most preferably, the fat is applied in an amount of 2-8% by weight of the uncooked or incompletely cooked foodstuff.

The term fat as used herein includes triglycerides as well as fatty acid containing emulsifiers, such as diglycerides, monoglycerides, esters of monoglycerides, esters of diglycerides, phospholipids and combinations thereof. Preferably, the fat employed in the present process contains at least 60 wt.%, most preferably at least 80 wt.% of triglycerides. The fat employed in the present method may be applied in liquid or solid form. Preferably, the fat is applied in liquid form, e.g. by spraying, brushing, dipping or immersion. The fat may be of vegetable, animal (including dairy) or marine origin. Most preferably, the fat employed is a liquid vegetable oil. Typically, at least 50%, preferably at least 80% and most preferably at least 90% of the exterior surface of the foodstuff is coated with the fat.

The temperature of the superheated steam employed in the present process can vary within a broad range. In order to obtain a ready-to-eat foodstuff with a slightly browned skin and a fully cooked interior an adequate combination of steam temperature and contact time should be chosen. Generally speaking, the higher the steam temperature, the shorter the contact time. Preferably, the superheated steam employed in the present method has a temperature in the range of 130-280 °C, most preferably of 150-250 °C.

The uncooked or incompletely cooked foodstuff is advantageously contacted with superheated steam having a pressure that is substantially below its saturated vapour pressure. According to a particularly preferred embodiment, the superheated steam has a pressure of 0.15 to 0.95 times, preferably of 0.3 to 0.8 times the water vapour pressure of the superheated steam.

The contacting of the uncooked or incompletely cooked foodstuff with the superheated steam is suitably achieved by passing a steady flow of superheated steam over the uncooked or incompletely cooked foodstuff. In order to ensure that the cooking process will proceed at an adequate rate it is preferred to pass superheated steam over the uncooked or incompletely cooked foodstuff at a flow rate of at least 1 m/s, preferably of at least 3 m/s. Usually, the flow rate does not exceed 50 m/s, preferably it does not exceed 30 m/s.

Direct contact between the superheated steam and the uncooked or incompletely cooked foodstuff is required to achieve the desired product characteristics. Direct contact is particularly relevant for achieving adequate surface browning and moisture reduction. Hence, if the uncooked or incompletely cooked foodstuff is contacted with the superheated steam while being placed on a tray or being held in a basket, it is essential that superheated steam can penetrate through such a tray or basket to reach the surface of the foodstuff. Typically, in the present method at least 80%, preferably at least 90% of the surface of the uncooked or incompletely cooked foodstuff is exposed directly to the superheated steam.

The ready-to-eat foodstuff obtained by the present method preferably is a fully cooked foodstuff. In case of flour-based foodstuffs, the flour starch present in the ready-to-eat foodstuff is preferably fully gelatinised during the contacting with the superheated steam.

Most preferably, the ready-to-eat foodstuff obtained by the present method is a doughnut and the method, prior to the application of the fat-based coating comprises the following steps:
- admixing flour, water, leavening agent and optionally other bakery ingredients to form a doughnut dough; and
- dividing the doughnut dough in shaped dough pieces.

Proper doughnuts cannot be prepared without the use of a leavening agent. Examples of leavening agents that may suitably be employed in the present method include yeast and baking powder. Most preferably, the present method employs yeast. In case yeast is employed as a leavening agent, it is preferred to apply the fat to the exterior of the shaped dough pieces after leavening (proofing), especially after the dough pieces have been leavened to a specific volume of at least 1.5 ml/g.

The ready-to-eat doughnuts obtained by the present method advantageously comprise cooked dough having a reduced fat content of not more than 14 wt.%, most preferably of not more than 10 wt.%. Preferably, said cooked dough contains at least 3 wt.%, most preferably at least 4 wt.% of fat.

The doughnut dough employed in the present method may be fat free or it may contain up to 10 wt.% of fat. Preferably, some fat is incorporated in the doughnut dough as this was found to yield a ready-to-eat doughnut with excellent eating properties. Advantageously, the doughnut dough has a fat content of 2-8 wt.%

The water content of cooked dough contained in the ready-to-eat doughnut obtained by the present method typically is within the range of 25-42 wt.%, preferably of 30-40 wt.%. The water content of the uncooked or incompletely cooked doughnut dough is substantially higher than that of the cooked doughnut dough as a considerable amount of water is vaporised during the contacting with the superheated steam. Typically, the water content of the dough in the shaped dough pieces is reduced by at east 5%, preferably by at least 10% during the contacting with the superheated steam.

The present invention offers the advantage that it enables the preparation of doughnuts with a high specific volume similar to that of deep fried doughnuts. Preferably, the ready-to-eat doughnuts have a specific volume of 2.2-4.5 ml/g, most preferably of 2.8-4.0 ml/g.

In the preparation of ready-to-eat doughnuts, during the contacting of the shaped dough pieces with the superheated steam, expansion of the dough pieces occurs. Typically, the volume of the shaped dough pieces is increased by 10-100% during the contacting with superheated steam.

The doughnut dough employed in the present method contains flour, water, leavening agent and optionally other bakery ingredients such as sugar, egg, fat etc. Typically, the doughnut dough employed in the present method contains 45-65 wt.% of flour, 25-45 wt.% of water and 1-6 wt.% of fat.

In an advantageous embodiment of the present invention the foodstuff is transported by means of a conveyor through an oven in which it is contacted with the superheated steam. Preferably, during transportation the foodstuff is carried by perforated trays or baskets having a porosity of at least 10%, preferably of at least 50%. The aforementioned baskets may suitably be employed as a moulding device for shaping the foodstuff, especially a foodstuff in the form of a dough piece.

The inventors have found that it can be advantageous to also apply a small amount of fat-based coating onto the foodstuff after it has been contacted with the superheated steam. During treatment with superheated steam, some of the fat may be removed from the surface of the foodstuff. For certain foodstuffs, such as doughnuts, a fatty appearance is desirable. Hence, in order to ensure that the ready-to-eat product has a fatty appearance, another fat-based coating is advantageously applied to the foodstuff after the foodstuff has been contacted with the superheated steam.

Another aspect of the present invention relates to a ready-to-eat doughnut comprising (fully) cooked dough, said cooked dough being characterised by a fat content of 4-10 wt.%, a water content of 30-40 wt.% and a specific volume of 2.5-4.5 ml/g, said doughnut being characterised in that the average fat content in the top layer of 1 mm thickness is at least two times higher than the average fat content in the top layer of 5 mm thickness. As explained herein before, particularly good quality low fat doughnuts can be obtained by the method described herein before if some fat is applied to the exterior of the shaped dough pieces prior to the contacting with the superheated steam. The doughnuts so obtained combine a crumb with a low fat content with a thin skin layer having a high fat content. It is believed that the fat content of the crumb of the doughnut is much less relevant to the eating quality of the doughnut than the fat content of the skin. Consequently, the doughnuts of the present invention offer the advantage that they contain the absolute minimum amount of fat that is necessary to achieve excellent eating quality.

The doughnut of the present invention typically has an average fat content in the top layer of 1 mm thickness of at least 40 wt.%, preferably of at least 50 wt.%. The average fat content in the top layer of 5 mm thickness typically does not exceed 30 wt.%, more preferably it does not exceed 25 wt.%. In contrast, the top layer of 5 mm thickness in ordinary doughnuts typically contains at least 40 wt.% of fat.

According to a particularly preferred embodiment, the average fat content in the top layer of 1 mm thickness is at least three times higher than the average fat content in the top layer of 5 mm thickness.

The ready-to-eat doughnuts of the present invention typically have a weight of 30-80 g.

The invention is further illustrated by means of the following examples.

### EXAMPLES

### Example 1

Ring doughnuts (41 grams) were prepared using the following recipe:

| | Wt.% |
|---|---|
| Flour | 54.2 |
| Water | 31.2 |
| Doughnut concentrate | 8.3 |
| Fat | 3.7 |
| Yeast | 2.6 |

In order to allow them to be shipped to another location for finish frying, the raw doughnuts so prepared were stored in a freezer at -20 °C. After 3 weeks, the frozen doughnuts were taken from the freezer and allowed to thaw at 25 °C for 30 minutes. Subsequently, the doughnuts were proofed by placing them in a proofing cabinet for 60 minutes (30 °C, 80% relative humidity).

The proofed doughnuts so obtained were divided into 4 groups: A, B, C, D and a reference group. Doughnuts belonging to groups B, C and D were sprayed on both sides with in total 2%, 6% and 9% of palm oil, respectively. The doughnuts belonging to the reference group were deep fried.

Immediately after proofing and fat coating, the doughnuts were placed on trays of a fine wire mesh (porosity > 80%). The trays were placed into a steam channel in which superheated steam (180 °C) was blown (7.2 m/s) upward through the wire mesh. After 90 seconds, the trays were removed, the doughnuts were turned and the tray was reinserted into the steam channel. After another 90 seconds, the trays were removed from the steam channel and allowed to cool down.

The doughnuts so obtained were analysed, yielding the following data:

| | A | B | C | D |
|---|---|---|---|---|
| Fat content (wt.%) | 6.1 | 6.3 | 7.8 | 7.8 |
| Moisture | 33.5 | 33.3 | 31.8 | 31.7 |
| Specific volume | 2.5 | 2.6 | 2.6 | 2.6 |

The fat content of the doughnuts so obtained was considerably lower than that of the doughnuts belonging to the reference group. The latter doughnuts had a fat content of about 18 wt.%.

The finish fried products obtained after the treatment with superheated steam were also evaluated by an expert panel. The products that had been coated with palm oil prior to the finish frying treatment (products B, C and D) were found to be superior to the doughnuts that had not been pre-coated (product A). In particular, it was observed that the doughnuts that had not been pre-treated had a slightly 'leathery' skin.

### Example 2

Example 1 was repeated except that this time sunflower oil was used instead of palm oil. Comparable results were obtained.

### Example 3

Example 1 was repeated except that this time rapeseed oil was used instead of sunflower oil. Comparable results were obtained.

### Example 4

Example 1 was repeated except that the superheated steam had a temperature of 220 °C and in that the doughnuts were finish fried by introducing them into the steam channel for twice 50 seconds. Again, comparable results were obtained.

### Example 5

Example 1 was repeated except that the superheated steam had a temperature of 160 °C and in that the doughnuts were finish fried by introducing them into the steam channel for twice 110 seconds. Once again, comparable results were obtained.

### Example 6

Ring doughnuts ready for finish frying were prepared as in Example 1. After proofing the doughnuts were parfried by dipping them for 10 seconds in hot oil having a temperature of 180 °C. Subsequently, the doughnuts were finish fried in the same way as described in Example 1, except that this time the residence time in the steam channel was two times 40 seconds. The fat content of the doughnuts so obtained was about 11.5 wt.%. In terms of quality these doughnuts were found to be comparable to the doughnuts belonging to groups C and D of Example 1.

## Claims

1. A method of preparing a ready-to-eat foodstuff, said method comprising the steps of:
• applying a fat-based coating to the exterior of an uncooked or incompletely cooked foodstuff; and
• contacting the fat coated foodstuff with superheated steam having a temperature of 120-300 °C for a period of 0.3-15 minutes, preferably of 1-10 minutes to obtain the ready-to-eat foodstuff.

2. Method according to claim 1 wherein the ready-to-eat foodstuff is prepared by contacting a fat coated uncooked foodstuff with the superheated steam.

3. Method according to claim 1 or 2, wherein the fat is applied in an amount of 1-10%, preferably 2-8% by weight of the foodstuff.

4. Method according to any one of the preceding claims, wherein the fat is selected from the group consisting of triglycerides, diglycerides, monoglycerides, phospholipids and combinations thereof.

5. Method according to any one of the preceding claims wherein the superheated steam has a temperature in the range of 130-280 °C, preferably of 150-250 °C.

6. Method according to any one of the preceding claims, wherein the uncooked or incompletely cooked foodstuff is contacted with superheated steam having a pressure of 0.15 to 0.95 times the saturated water vapour pressure.

7. Method according to any one of the preceding claims, wherein the superheated steam is passed over the foodstuffs at a flow rate of 1-50 m/s, preferably of 3-30 m/s.

8. Method according to any one of the preceding claims, wherein the uncooked or incompletely cooked foodstuff contains at least 40 wt.% of a flour-based dough or batter and optionally up to 80 wt.% of a filling..

9. Method according to claim 8, wherein the ready-to-eat foodstuff is a doughnut and wherein the method, prior to the application of the fat-based coating comprises the following steps:
• admixing flour, water, leavening agent and optionally other bakery ingredients to form a doughnut dough; and
• dividing the doughnut dough in shaped dough pieces.

10. Method according to claim 9, wherein the flour starch in the core of the shaped dough pieces is non-gelatinised when it is contacted with the superheated steam.

11. Method according to any one of claims 8-10, wherein the cooked dough of the ready-to-eat doughnut has a fat content of 3-14 wt.%, preferably of 4-10 wt.%.

12. Ready-to-eat doughnut comprising a cooked dough, said cooked dough being **characterised by** a fat content of 4-10 wt.%, a water content of 30-40 wt.% and a specific volume of 2.5-4.5 ml/g, said doughnut being **characterised in that** the average fat content in the top layer of 1 mm thickness is at least two times higher than the average fat content in the top layer of 5 mm thickness.

13. Ready-to-eat doughnut according to claim 12, said doughnut being prepared by a method according to any one of claims 1-11.
